# EUROPÄISCHE PATENTSCHRIFT

(11) **EP 0 925 578 B1**
(45) Veröffentlichungstag und Bekanntmachung des Hinweises auf die Patenterteilung: **27.03.2002**
(21) Anmeldenummer: 97942774.7
(22) Anmeldetag: 02.09.1997
(51) Int. Cl.: G10L 13/04, G10L 15/26

(54) **SPRACHVERARBEITUNGSSYSTEM UND VERFAHREN ZUR SPRACHVERARBEITUNG**
SPEECH-PROCESSING SYSTEM AND METHOD
SYSTEME ET PROCEDE DE TRAITEMENT DE LA PAROLE

(30) Priorität: 03.09.1996 DE 19635754
(43) Veröffentlichungstag der Anmeldung: 30.06.1999
(73) Patentinhaber: SIEMENS AKTIENGESELLSCHAFT, 80333 München (DE)
(72) Erfinder: NIEDERMAIR, Gerhard, D-85256 Vierkirchen (DE); KARSTEN, Peter, D-82061 Neuried (DE); HARENGEL, Steffen, D-80689 München (DE); MURR, Florian, D-80798 München (DE)
(86) Internationale Anmeldenummer: DE9701920
(87) Internationale Veröffentlichungsnummer: WO9810413

(56) Entgegenhaltungen:
- EP-A- 0 607 615
- EP-A- 0 730 261
- WO-A-96/18260
- DE-A- 4 412 309
- GB-A- 2 119 208
- DATABASE INSPEC INSTITUTE OF ELECTRICAL ENGINEERS, STEVENAGE, GB Inspec No. 2578705, BERGERON L E ET AL: "Voice applications for the office using digital signal processing" XP002051225 & CONFERENCE RECORD EIGHTEENTH ASILOMAR CONFERENCE ON CIRCUITS, SYSTEMS AND COMPUTERS (CAT. NO. 85CH2200-4), PACIFIC GROVE, CA, USA, 5-7 NOV. 1984, ISBN 0-8186-0673-8, 1985, WASHINGTON, DC, USA, IEEE COMPUT. SOC. PRESS, USA, Seiten 238-242,

## Beschreibung

In üblichen Sprachverarbeitungssystemen beispielsweise für telefonbasierte Anwendungen werden verschiedenste Möglichkeiten der sprachlichen Eingabe und Ausgabe angeboten. Dies reicht von der Erkennung von einzeln gesprochenen Ziffern und einer meist begrenzten Anzahl von Kommandowörtern bis zur Eingabemöglichkeit fließend gesprochener Äußerungen. Die Ausgabemöglichkeiten reichen vom Ausgeben komplett aufgenommener Äußerungen bis zu rein synthetisch erzeugter akustischer Ausgabe von Texten aus beispielsweise abgespeicherten Phonemen.

Anwendungen von Sprachverarbeitungssystemen im industriellen, öffentlichen sowie im privaten Bereich sind mit sehr unterschiedlichen Anforderungen sowohl an die Spracheingabe als auch an die Sprachausgabe konfrontiert. Dies ist bedingt durch die Vielfalt der Anwendungsmöglichkeiten und der damit von den Sprachverarbeitungssystemen zu lösenden sprachlichen Aufgaben.

Dies gilt ebenso für Sprachdialogsysteme, bei denen das Sprachverarbeitungssystem mit dem Benutzer des Sprachverarbeitungssystems in einem beliebig ausgestalteten Dialog steht.

Bei einer Anwendung im Bereich von Sprachverarbeitungssystemen kann es beispielsweise erforderlich sein, daß zu einem Zeitpunkt vom Benutzer eine Ziffer einzeln abgefragt wird, zu einem anderen Zeitpunkt innerhalb desselben Dialoges aber von dem Benutzer ein Datum eingegeben werden kann und vom Sprachverarbeitungssystem verarbeitet werden soll.

Ebenso kann bei der Ausgabe an einer Stelle die Ausgabe einer Sprachkonserve ausreichend sein, während an anderer Stelle eines Anwendungsszenarios durch die hohe Variabilität des auszugebenden Textes eine Sprachsynthese geeigneter ist.

Desweiteren können zu verschiedenen Zeitpunkten verschiedene Leistungsmerkmale von Spracherkennern vom Betreiber als erforderlich erachtet werden, wie z. B. die Unterbrechbarkeit der Systemausgabe wünschenswert sein kann, wohingegen an anderer Stelle jedoch der Benutzer die Ausgabe vollständig anhören sollte.

Um eine möglichst effiziente Verwendung der spezialisierten, bekannten Algorithmen zur Spracherkennung und zur Sprachausgabe und auch Sprachdialogsysteme mit komplexeren Erkennungseigenschaften und Ausgabeeigenschaften als beispielsweise zur einfachen Ziffernerkennung oder nur zur isolierten Erkennung von einer kleinen Anzahl von Kommandowörtern, war es bisher üblich, die Systeme in einer Weise zu erstellen, daß durch die besondere Auswahl von technischen Methoden und spezifischen softwaretechnischen Maßnahmen den spezifischen Anforderungen an die Spracherkennung bzw. an die Sprachausgabe Rechnung getragen wurde.

Dies erfordert jedoch einen großen personellen Aufwand von Experten, die für jede neue Anwendungssituation in der Regel neu zu erbringen ist. Durch diese Vorgehensweise wird eine effiziente wirtschaftliche Nutzung von Sprachverarbeitungssystemen erheblich behindert.

Im Telefonbereich existieren Dialogsysteme, bei denen eine Auswahl beispielsweise über sog. DTMF-Töne und einfache Nennung von Ziffern oder einiger, weniger vorgegebener Komandoworte erfolgt.

Jedoch ist der Aufwand für eine neue Entwicklung eines Sprachverarbeitungssystems bzw. eines Sprachdialogsystems mit den bisherigen Verfahren und Systemen sehr aufwendig.

Aus [3] ist ein Verfahren zur Verbesserung der Spracherkennung unter Berücksichtigung verschiedener digitaler Codierbedingungen bekannt. Dabei wird für eine Mehrzahl von Spracherkennungsmodulen, die alle den gleichen Spracherkennungsalgorithmus verwenden, jedoch möglichst optimal adaptiert an unterschiedeliche Kanalcodierungsverfahren für empfangene Signale das jeweils verwendete Kanalcodierungsverfahren erkannt und das jeweilig entsprechende Spracherkennungsmodul ausgewählt.

Aus [6] ist ein Verfahren und eine Anordnung zur Generierung einer Vielzahl elektrischer Signale bekannt. Bei dieser Anordnung werden eine Vielzahl von Sprachausgabeeinheiten gleichen Aufbaus miteinander kombiniert zu der Gesamtanordnung.

Somit liegt der Erfindung das Problem zugrunde, ein Sprachverarbeitungssystem sowie ein Verfahren zur Sprachverarbeitung anzugeben, mit dem eine optimale, kontextangepaßte Nutzung von Spracherkennungsmodulen und/oder Sprachausgabemodulen unter Verminderung benötigter Rechenkapazität erreicht wird.

Das Problem wird durch das Sprachverarbeitungssystem gemäß Patentanspruch 1 sowie durch das Verfahren gemäß Patentanspruch 6 gelöst.

Das Sprachverarbeitungssystem weist mehrere Spracherkennungsmodule und/oder Sprachausgabemodule auf, die jeweils für eine vorgebbare Art einer Spracherkennung bzw. einer Sprachausgabe vorgesehen sind. Das Sprachverarbeitungssystem weist darüberhinaus eine Dialogablaufsteuerung auf. Mit der Dialogablaufsteuerung DA wird ein vorgebbarer Dialog mit dem Benutzer B des Sprachverarbeitungssystems je nach der Anwendungssituation durchgeführt, und abhängig von der jeweiligen Dialogssituation dem Mittel MA Steuerungsinformation, bzw. Eingabesignal beisplelsweise noch benötigte Information zugeführt. Weiterhin wird in dieser Weiterbildung beispielsweise das Ergebnis der Spracherkennungsmodule in dem Mittel zur Dialogablaufsteuerung ausgewertet. Ferner weist das Sprachverarbeitungssystem ein Mittel zur Auswahl eines Spracherkennungsmoduls und/oder Sprachausgabemoduls auf. Durch das Mittel wird abhängig von dem Eingabesignal, welches dem Mittel zugeführt wird, das jeweilige Spracherkennungsmodul bzw. Sprachausgabemodul ausgewählt, aktiviert und das entsprechende Sprachsignal bzw. die erforderlichen Parameter werden dem jeweiligen Modul zugeführt. Die Spracherkennung bzw. die Sprachausgabe wird dann von dem jeweiligen Modul ausgeführt.

Bei dem Verfahren wird ein Eingabesignal analysiert mit dem beschrieben wird, welche Art von Spracherkennung bzw. Sprachausgabe benötigt wird. Abhängig von dem Eingabesignal wird mindestens ein Spracherkennungsmodul und/oder mindestens ein Sprachausgabemodul für die jeweils durch das Eingabesignal beschriebene Spracherkennung bzw. Sprachausgabe, aktiviert. Mit dem jeweils ausgewählten bzw. aktivierten Modul wird die jeweilige Art der Spracherkennung bzw. Sprachausgabe durchgeführt.

Das Eingabesignal wird erzeugt bei einem mit einem Benutzer durchgeführten vorgegebenen Dialog.

Sowohl das Sprachverarbeitungssystem als auch das Verfahren weisen eine Vielzahl erheblicher Vorteile gegenüber dem Stand der Technik auf.

Der Bedarf an Rechenkapazität bzw. an Verarbeitungsressourcen für die Spracherkennung bzw. zur Sprachausgabe wird erheblich reduziert, da abhängig von der jeweils benötigten Anwendungssituation das für die Situation optimal angepaßte Modul zur Spracherkennung bzw. zur Sprachausgabe verwendet wird.

Auch bei der Erstellung von Sprachdialogsystem ist das Sprachverarbeitungssystem zur Entwicklungsunterstützung sehr vorteilhaft einsetzbar. Besondere Vorteile bietet dieses Sprachverarbeitungssystem in diesem Bereich, da eine schnelle und einfache Anpassung der vorhandenen technischen Spracherkennungsverfahren und Sprachausgabeverfahren an die jeweiligen spezifischen Erfordernisse der Anwendungssituation möglich ist.

Weiterhin wird eine flexible, der spezifischen Dialogssituation angepaßte Nutzung von deren unterschiedlichen Fähigkeiten und Leistungsmerkmalen erreicht. Auch ist eine flexible Anpassung der Spracherkennungsleistung und Sprachausgabeleistung an die bei den Benutzern in der spezifischen Dialogsituation verfügbaren Ressourcen, beispielsweise der verfügbaren Rechnerkapazität möglich.

Somit stellt das Sprachverarbeitungssystem ein bedeutendes Mittel dar zur bedarfsgerechten Konfiguration und Anpassung von Spracheingabe und Sprachausgabe in verschiedensten Anwendungssituationen.

Vorteilhafte Weiterbildungen der Erfindung ergeben sich aus den abhängigen Ansprüchen.

Es ist in einer Weiterbildung des Sprachverarbeitungssystems sehr vorteilhaft, bestimmte Algorithmen, also bestimmte Teile der Module gemeinsam zu verwenden, wodurch eine redundante Realisierung lediglich eigentlich nur einmal benötigter Algorithmen vermieden wird.

Auch ist eine vorteilhafte Weiterbildung darin zu sehen, daß mehrere Spracherkennungsmodule gemeinsame Resourcen verwenden, beispielsweise gemeinsame Lexika für die Spracherkennung. Dies führt zu einer erheblichen Einsparung von Ressourcen, z. B. von Speicherbedarf.

Weiterhin ist es vorteilhaft, eine Dialoglaufsteuerung vorzusehen, mit der ein Dialog des Sprachverarbeitungssystems mit einem Benutzer realisiert werden kann.

Ein Ausführungsbeispiel der Erfindung ist in den Figuren dargestellt und wird im weiteren näher erläutert.

Es zeigen
- Fig. 1: das Sprachverarbeitungssystem mit einigen Weiterbildungen;
- Fig. 2: ein Blockdiagramm, in dem die Dialogablaufsteuerung dargestellt ist;
- Fig. 3: ein Ablaufdiagramm, in dem ein mögliches Verfahren, welches zur Dialogablaufsteuerung durchgeführt wird, dargestellt ist;
- Fig. 4: ein Ablaufdiagramm, in dem das erfindungsgemäße Verfahren dargestellt ist.

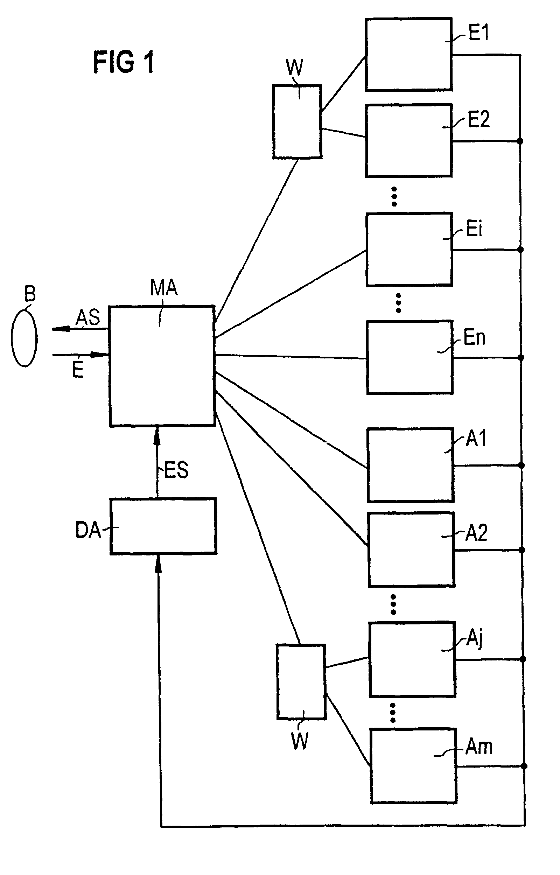

In Fig. 1 ist das Sprachverarbeitungssystem dargestellt. Das Sprachverarbeitungssystem weist mindestens ein Spracherkennungsmodul E1, E2, Ei, ..., En auf. Mit einem Index i, einer beliebigen Zahl zwischen 1 und n, wird jeweils das Spracherkennungsmodul Ei eindeutig gekennzeichnet. Mit n wird eine Anzahl von Spracherkennungsmodulen in dem Sprachverarbeitungssystem bezeichnet.

Ferner weist das Spracherkennungssystem zusätzlich oder alternativ mindestens ein Sprachausgabemodul A1, A2, Aj, ..., Am auf. Mit einem zweiten Index j, einer beliebigen Zahl zwischen 1 und m, wird jedes Sprachausgabemodul Aj eindeutig gekennzeichnet. Mit m wird eine Anzahl von Sprachausgabemodulen in dem Sprachverarbeitungssystem bezeichnet.

Ferner weist das Sprachverarbeitungssystem ein Mittel MA zur Auswahl der Spracherkennungsmodule Ei bzw. der Sprachausgabemodule Aj auf. Das Mittel MA zur Auswahl der Module ist mit den einzelnen Modulen Ei, Aj gekoppelt, so daß von dem Mittel MA zur Auswahl der Module Ei, Aj an die einzelnen Module Ei, Aj Signale gesendet werden können, beispielsweise zur Aktivierung der einzelnen Module Ei, Aj oder auch zur Übergabe von Parametern, die von den einzelnen Modulen zur Durchführung der Spracherkennung oder der Sprachausgabe benötigt werden.

### Spracherkennungsmodule Ei

Grundlagen über die Spracherkennung sind beispielsweise in den Dokumenten [1] und [2] beschrieben.

Die einzelnen Spracherkennungsmodule E1, E2, ..., En sind Module, die jeweils auf eine bestimmte Art der Spracherkennung spezialisiert sind.

Die einzelnen Spracherkennungsmodule Ei können beispielsweise durch Hardware oder auch durch einzelne Softwareprozeduren realisiert sein.

Im folgenden wird eine keineswegs abschließend zu betrachtende Übersicht über vorgesehene Spracherkennungsmodule Ei gegeben, die im Rahmen des Sprachverarbeitungssystems verwendet werden können.

### - Einzelziffernerkenner

Ist ein Spracherkennungsmodul Ei als ein Einzelziffererkenner ausgebildet, so ist es derart ausgestaltet, als Eingabe ein einzelnes, vom Benutzer B des Sprachverarbeitungssystems eingesprochenes Sprachsignal, welches eine einzige Ziffer repräsentiert, aus einer Auswahl von Ziffern, zu verarbeiten. Dabei unterscheiden sich die Einzelziffernerkenner üblicherweise in der Modellierung der akustischen Muster. Es sind Systeme bekannt, in denen von verschiedenen Sprechern die akustischen Muster für ein ganzes Wort gespeichert werden und mittels Vergleichsverfahren wie dem sog. Dynamic Programming oder dem Dynamic Time Warping oder auch unter Verwendung neuronaler Netze beim Erkennungsvorgang das am besten passende Wort ermittelt wird. Andere bekannte Module zur Einzelziffernerkennung basieren auf dem Prinzip der Hidden-Markov-Modelle. Bei diesen Prinzip der Einzelziffernerkennung wird die Lautfolge der von mehreren Sprechern gesprochenen Wörter als Zustandsfolge mit Variable und vorgegebener Länge abgespeichert. Bei der Erkennung der Wörter, in diesem Fall der Ziffer, wird der geringste Abstand zu der abgespeicherten Wortfolge ermittelt. Bei Varianten dieses Prinzips werden in Hidden-Markov-Modellen die Folgen der einzelnen phonetischen Einheiten abgespeichert, die aus den Daten mehrerer Sprecher gewonnen werden, in der Regel Ziffern. Zur Verminderung benötigter Rechenkapazität kann bei einem Einzelziffernerkenner ausgenutzt werden, daß auf keine der gespeicherten lautlichen Folgen eine weitere Folge auftreten kann. Aus diesem Grund ist in diesem Fall keine rechenaufwendige Detektion von Worgrenzen erforderlich. Auch ist der zu untersuchende Wortschatz relativ gering, da lediglich die Ziffern untersucht werden müssen.

### - Ziffernkettenerkenner

Ist ein Spracherkennungsmodul Ei als Ziffernkettenerkenner ausgestaltet, so ist das Spracherkennungsmodul in der Regel mit Erkennern für kontinuierliche Sprache gleichzusetzen. Eine Anzahl von in einem digitalen Lexikon definierten, vorgebbaren Wörtern, in diesem Spezialfall Ziffern, kann in beliebiger Reihenfolge hintereinander von einem Benutzer B des Sprachverarbeitungssystems geäußert werden. Für diesen Fall ist eine Detektion der Grenzen zwischen den einzelnen Worten erforderlich. Dies kann entweder durch ein Verfahren zur expliziten Detektion der Wortgrenzen erfolgen, oder die Wortgrenzen werden von dem Algorithmus der Wortsuche festgelegt. Bei der Wortsuche werden parallel alle Ziffern im Eingabesignal untersucht und verschiedene Enden hypothetisiert. An jedem Ende kann im Signal eine weitere Ziffer gesucht werden. Dazu wird ein Suchraum aufgebaut, der die verschiedenen Alternativen gleichzeitig verfolgt und sie nach vorgebbaren Qualitätskriterien ordnet. In diesem Zusammenhang kann beispielsweise das Prinzip der Dynamischen Programmierung verwendet werden, wie es in dem Dokument [1] beschrieben ist. Ein solches Kriterium kann der Abstand der beobachteten Teile des Signals zu den Referenzmustern, den einzelnen gespeicherten Ziffern sein. Ziffernkettenerkenner zeichnen sich in der Regel von kontinuierlichen Erkennern in der besonderen Art der Modellierung der akustischen Referenzmuster aus, bei denen bei der Ziffer eine spezifische Artikulationsweise oder typische Längen der einzelnen Ziffern ausgenutzt werden. Durch eine Modellierung von Sprachpausen oder durch ein Entscheidungskriterium, z. B. die im Signal sichbare Energie, kann in unterschiedlichen Heuristiken das Ende einer solchen Folge detektiert werden.

### - Erkennung von Wörtern aus einem begrenzten Vokabular

Ist ein Spracherkennungsmodul Ei als ein Spracherkenner für bestimmte häufige Kommandoworte aus einem begrenzten Vokabular, dem sog. Kernvokabular ausgestaltet, so werden algorithmisch die entsprechenden Verfahren angewendet wie auch zur Einzelziffernerkennung, jedoch mit dem Unterschied, daß das Vokabular um die entsprechenden Worte erweitert ist bzw. daß sich das Vokabular, mit den entsprechenden gespeicherten Repräsentanten der einzelnen Worte von den Ziffern unterscheidet. Das speziell erweiterte bzw. ersetzte Vokabular ist für den Spracherkenner vorgegeben und in der Regel mit einer größeren Anzahl von Sprechern trainiert.

### - Erkennung eines Einzelwortes aus einem unbegrenzten Vokabular

Zur Erkennung fließend gesprochener Sprache mit einem unbegrenzten Vokabular ist ein Spracherkennungsmodul Ei derart ausgestaltet, daß die Worte des Vokabulars dem Spracherkennungsalgorithmus, der in dem Spracherkennungsmodul Ei realisiert wird, nicht bekannt sind, sondern von einem Benutzer B zuvor bestimmt werden. Der Algorithmus zur Spracherkennung basiert üblicherweise auf der Erkennung einer Folge von lautlichen Einheiten, den sog. Phonemen oder anderen Wortuntereinheiten, aus denen sich die Worte des zu erkennenden Vokabulars zusammensetzen lassen. In dem Lexikon des Spracherkennungsmoduls Ei werden in einem Speicher die das jeweilige Wort kennzeichnenden lautlichen Folgen abgespeichert. Die Laute können in ihrer Modellierung auch noch weitere Untereinheiten, wie z. B. Beginn des Phonems, Mitte des Phonems, Ende des Phonems, Übergang des Phonems, etc. aufweisen. Das Spracherkennungsverfahren sucht aus dem beobachteten Sprachsignal wiederum die Folge mit dem geringsten Abstand zu den Referenzdaten auf. Der Einzelworterkenner kann algorithmisch den Umstand ausnutzen, daß auf keine der im Inventar abgelegten lautlichen Folgen eine weitere Folge auftreten kann.

### - Erkennung fließend gesprochener Sprache mit einem unbegrenzten Vokabular

Ist ein Spracherkennungsmodul Ei zur Erkennung fließend gesprochener Äußerungen des Benutzers mit einem unbegrenzten Vokabular ausgestaltet, so unterscheidet sich das Spracherkennungsmodul Ei von einem Spracherkennungsmodul Ei zur Ziffernkettenerkennung in der Regel in der Art der Modellierung der lautlichen Einheiten. Ist das lexikalische Inventar, also das Vokabular, unbegrenzt, was auch als ein offenes lexikalisches Inventar bezeichnet wird, erfolgt die akustische Modellierung meist auf lautlichen Einheiten, den Phonemen, oder auf Wortuntereinheiten, aus denen sich das zu erkennende Vokabular zusammensetzen läßt. Ebenso wie bei dem Spracherkennermodul Ei für kontinuierliche Ziffern werden bei dieser Ausgestaltung des Spracherkennungsmoduls die Grenzen zwischen den Wörtern durch eine geeignete Suche bestimmt. Dies erfolgt beispielsweise durch eine Modellierung von Sprachpausen oder durch ein Entscheidungskriterium, z. B. die im Signal sichtbare Energie. Das Spracherkennungsmodul kann die wahrscheinlichste, oder mit Erweiterungen im Suchalgorithmus eine vorgebbare Anzahl wahrscheinlichster Folgen von Wörtern ausgeben. Die Suche bei kontinuierlichen Spracherkennungsmodulen wird meistens durch eine Modellierung der für einen bestimmten Sprachausschnitt typischen oder möglichen Wortfolgen, den sog. Language-Modellen unterstützt. Unter Language-Modellen sind beispielsweise grammatische Modellierungen der Wortfolgen oder Wortlisten oder statistische Modellierungen im Sinne einer sog. N-Gram-Analyse zu verstehen.

### - Erkennung von vorgegebenen Wortkombinationen

Zur Erkennung von vorgegebenen Wortkombinationen ist ein Spracherkennungsmodul Ei derart ausgestaltet, daß beispielsweise Datumsangaben, Uhrzeitangaben, Maßangaben, Zahlenangaben, etc. als spezielles Vokabular verwendet werden. Bei diesen Spracherkennungsmodulen Ei handelt es sich üblicherweise um Spracherkennungsmodule Ei für kontinuierliche Sprache, deren lexikalisches Inventar aber auf die vorgegebenen Wortkombinationen aus den jeweiligen Bereichen, wie beispielsweise eine Datumsangabe oder eine Maßangabe zugeschnitten ist. Des weiteren kann die Wortfolgensuche durch eine Modellierung der möglichen Wortfolgen wie bei einem kontinuierlichen Spracherkennungsmodul Ei unterstützt werden, wobei sich diese Modellierung dadurch auszeichnet, daß sie im wesentlichen die zu erwartenden Ausdrucksweisen in einem dieser sprachlichen Untergebiete, z. B. Datumsangabe, besonders berücksichtigt.

### - Schlüsselworterkennung

Bei einem Spracherkennungsmodul Ei zur Schlüsselworterkennung können in einem Spracheingabesignal ein oder mehrere vorgegebene Worte, die in einem Lexikon zuvor gespeichert wurden, detektiert werden. Die verschiedenen Möglichkeiten zur Ausgestaltung der Spracherkennungsmodule zur Schlüsselworterkennung sind beispielsweise in dem Dokument [4] beschrieben.

### - Erkennung von Schlüsselwortkombinationen

Zur Erkennung von Schlüsselwortkombinationen wird das gleiche Prinzip wie zur Erkennung von Schlüsselworten verwendet, mit dem Unterschied, daß vordefinierte Wortketten in einem beliebigen Eingabesignal ES detektiert werden können. Die Wortketten können entweder explizit als Referenzdaten abgespeichert werden oder durch andere Verfahren, beispielsweise LanguageModelle oder Grammatiken beschrieben werden.

### - Alphabeterkennung

Ist ein Spracherkennungsmodul Ei als eine Alphabeterkennungseinrichtung ausgestaltet, so werden üblicherweise die Buchstaben mit besonderen akustisch phonetischen Modellen beschrieben. Als lexikalische Einheiten, die in einem Speicher des Sprachverarbeitungssystems vorgesehen sind, werden in diesem Fall im wesentlichen die Buchstaben des Alphabets verwendet. Ein Alphabeterkenner kann beispielsweise als Einzelworterkenner das isolierte Alphabet oder auch als kontinuierlicher Erkenner für eine fließende Buchstabierung realisiert sein. Bei kontinuierlichen Alphabeterkennern kann durch Language-Modelle oder auch durch Grammatiken die Suche der tatsächlichen Wortfolgen unterstützt werden.

### - Lautfolgeerkennung

Ein Spracherkennungsmodul Ei zur Lautfolgenerkennung zeichnet sich dadurch aus, daß die akustischen Einheiten auf phonetische Einheiten modelliert werden und die zu erkennenden Lautfolgen nicht durch ein Lexikon beschränkt sind. Lautfolgenerkenner bzw. Phonemerkenner beruhen auf akustisch-phonetischen Modellierungen der Laute einer Sprache. Mit dem phonetischen Inventar wird die Suche in dem akustischem Sprachsignal durchgeführt. Hypothetisiert wird eine beliebige Kette von Lauten. In der akustischen Analyse werden verschiedene Heuristiken verwendet, um ein zu schnelles Wechseln der hypothetisierten Laute, den Phonemen, in einer Äußerung zu verhindern. Zusätzlich können als Einschränkungen der zu erkennenden Lautfolgen im Sinne von Language-Modellen phonetische Gesetzmäßigkeiten einer Sprache berücksichtigt werden.

### - DTMF-Erkennung

Eine DTMF-Erkennung ist aus verschiedensten Bereichen der telefonischen Spracherkennung bekannt.

Als Sprachausgabemodule Aj können verschiedene bekannte Prinzipien zur Realisierung verschiedener Sprachausgabeprinzipien verwendet werden:

### - Ausgabe vorgegebener, gespeicherter Sprachkonserven

Ist ein Sprachausgabemodul Aj zur Ausgabe vorgegebener, gespeicherter Sprachkonserven ausgestaltet, so werden Sprachäußerungen, die vorher von einer beliebigen Person eingesprochen, aufgenommen und digitalisiert abgespeichert wurden, über einen beliebigen akustischen Kanal ausgegeben. Die aufgenommenen Äußerungen können hierbei die kompletten auszugebenden Äußerungen sein, die jeweils für eine bestimmte Situation vorgesehen sind, oder aber auch Bruckstücke davon, die zur Laufzeit wieder zu kompletten Äußerungen zusammengesetzt werden. Ein typisches Beispiel hierfür ist die Bildung von Ziffernketten, deren Länge und Zusammensetzung in den meisten Anwendungsfällen nicht vorhersehbar ist. Es können jedoch je nach Kontext verschiedene intonatorische Varianten ein und derselben Äußerung vorliegen und in einem Softwareprogramm entsprechend dem aktuellen Kontext ausgewählt werden. Ferner sind verschiedene Methoden anwendbar, die eine sog. akustische Glättung der verwendeten Konserven an den Übergängen der Konkatenation der einzelnen Sprachkonserven in verschiedenster Form vornehmen können.

### - Ausgabe von aus gespeicherten Phonemen synthetisierten Worten

Mögliche Realisierungen zur Ausgestaltung von Sprachausgabemodulen zur Synthese von gespeicherten Phonemen zu synthetisierten Worten sind in dem Dokument [5] beschrieben.

Das Mittel MA zur Auswahl der in einem Anwendungsszenario jeweils zu verwendenden Spracherkennungsmodule Ei bzw. Sprachausgabemodule Aj ist derart ausgestaltet, daß abhängig von einem dem Mittel MA zugeführten Eingabesignal ES mindestens eines der Spracherkennungsmodule bzw. der Sprachausgabemodule aktiviert wird und, soweit es erforderlich ist, den einzelnen Spracherkennungmodulen Ei bzw. Sprachausgabemodulen Aj Parameter, die im weiteren Verfahren zur Spracherkennung bzw. zur Sprachausgabe erforderlich sind, zugeführt werden. Die entsprechenden Paramter können beispielsweise darin zu sehen sein, daß den Spracherkennungsmodulen Ei bzw. den Sprachausgabemodulen Aj Ressourcen zugewiesen werden oder auch beispielsweise die Speicheradressen der verwendeten digitalen Lexika zugeführt werden.

In diesem Ausführungsbeispiel werden die Ergebnisse, also die ausgegebenen Sprachsignale aus den Sprachausgabemodulen Aj dem Mittel MA zugeführt, und beispielsweise über einen Ausgang AS des Sprachverarbeitungssystems dem Benutzer B ausgegeben. Ein von einem Benutzer B gesprochenes Sprachsignal wird über einen Eingang E, beispielsweise realisiert durch einen Mikrophon, dem Mittel MA zugeführt, und über das Mittel MA abhängig von den jeweils aktivierten Spracherkennungsmodulen Ei, den jeweils aktivierten Spracherkennungsmodul Ei zugeführt.

Die einzelnen Module Ei, Aj verwenden u. a. Wissensquellen, beispielsweise digitale Lexika, allgemeine Daten, die in einem Speicher des Sprachverarbeitungssystems gespeichert sind. Unter den Wissensquellen sind beispielsweise auch auf die jeweilige Spracherkennungsaufgabe spezialisierte akustischer Modelle, z. B. ein Einzelworterkenner mit Lautmodellen oder Einzelworterkenner mit akustischen Modellen für beliebige Wörter, zu verstehen. Die Wissensquellen können aber auch die von den Erkennern für einen gegebenen Dialogschritt in einem Dialogsystem zur Auswahl stehenden spezifischen Wortschätze sein, oder für bestimmte, erwartete eingabespezifische sog. Sprachmodelle.

Das von den Spracherkennungsmodulen Ei verwendete Vokabular ist beliebig durch orthographische, d. h. sprecherunabhängige, oder sprachliche, d. h. sprecherabhängige, Eingabe sowohl bei der Erstellung als auch aktuell zur Laufzeit des Sprachverarbeitungssystems erweiterbar und damit an wechselnde Anforderungen anpaßbar.

Durch geeignete Lernverfahren können die Wissensquellen während des Betriebs des Sprachverarbeitungssystems durch eine Auswertung der laufenden Eingabedaten modifiziert und der besonderen Nutzungs- und Anwendungssituation angepaßt werden.

Weiterhin kann ein Parameter, der den Spracherkennungsmodulen Ei oder den Sprachausgabemodulen Aj zugeführt wird darin zu sehen sein, daß mit dem Parameter angegeben wird, ob selbst während einer Sprachausgabe von dem Benutzer B gesprochene Sprachsignale bearbeitet und von dem Sprachverarbeitungssystem aufgenommen werden können.

Im folgenden wird anhand eines sehr einfachen Beispiels für eine Dialogsituation eine Ausgestaltung des Sprachverarbeitungssystems als Sprachdialogsystem dargestellt.

In der folgenden Darstellung in einem Pseudo-Nachrichtenflußdiagramm wird jeweils zu Beginn einer Zeile auf der linken Seite eines Pfeils der Sender eines bestimmten Signals und auf der rechten Seite eines Pfeils der Empfänger des Signals, das im weiteren in dieser Zeile angegeben ist, beschrieben.

In diesem Beispiel wird ohne Einschränkung der Allgemeinheit von einer Weiterbildung, welche im weiteren beschrieben wird, ausgegangen, nämlich einer Dialogablaufsteuerung DA.
- DA → MA:: GebeAus("Bitte nennen Sie Ihre Nummer nach dem Piepton")
- MA → A1:: PlayPromptFile (Bitte_nennen_Sie_Ihre_Nunimer_nach_ dem_Piepton)
- A1 → MA:: PlayPromptFinished
- MA → DA:: AusgabeComplete

- DA → MA:: ErkenneÄußerung(Domäne=Ziffern, Anzahl max.=5)
- MA → E1:: StarteErkennung(Modus=Einzelziffer, Lexikon=Digits)
- MA → E2:: StarteErkennung(Modus=kontinuierliche Ziffernerkennung, Lexikon= Digits)
- E1 → MA:: ErkenneAusgabe(Modus=Einzelziffer, Resultat=0)
- E2 → MA:: ErkenneAusgabe(Modus=kontinuierliche Ziffern, erkannte Ziffernfolge: 1 2 3 4 5)

- MA → DA:: EingabeZiffernfolge: (1 2 3 4 5)
- DA → MA:: GebeAus("Ihre Nummer ist 1 2 3 4 5")
- DA → A1:: PlayPromptFile(Ihre_Nummer_ist)
- MA → A2:: Synthesise(Ziffernfolge 1 2 3 4 5)
- A1 → MA:: PlayPromptFinished
- A2 → MA:: Synthesise Finished
- MA → DA:: AusgabeComplete

DA → MA: GebeAus("Möchten Sie Vertrieb oder Kundenservice sprechen?")
MA → A1: PlayPromptFile(Möchten_Sie_Vertrieb_oder_ Kundenservice-sprechen)
A1 → MA: Prompt file not available
MA → A2: Synthesise(Möchten Sie Vertrieb oder Kundenservice sprechen?)
A2 → MA: Synthesis finished
MA → DA: Ausgabe complete

DA → DM: Erkennesprache(Domäne=Vertrieb_oder_Kundenservice)
MA → E3: StarteErkennung(Modus=kontinuierlich, Lexikon=Kernvokabular)
DM → E4: StarteErkennung(Modus=Schlüsselworterkennung, Lexikon=Vertrieb und Kundenservice)
E3 → MA: ErkennerAusgabe(Modus=kontinuierlich, Resultat="den Vertrieb bitte")
E4 → MA: ErkennerAusgabe(Modus=Schlüsselworterkennung, Resultat="Vertrieb")
MA → DA: Eingabezeichenfolge(Vertrieb)

- DA → MA:: GebeAus("Ihr Geburtsdatum bitte")
- MA → A1:: PlayPromptFile(Ihr_Geburtsdatum_bitte)

DA → MA: ErkenneÄußerung(Domäne=Datum)
DM → E5: StarteErkennung(Modus=kontinuierlich, Lexikon=Datumsangabe)
E5 → MA: ErkenneAusgabe(Modus=kontinuierlich, Resultat 1="am ersten ersten neunzehnhundertfünfzig", Resultat 2="am ersten elften neunzehnhundertfünfzig")
MA → DA: Eingabezeichenfolge(am ersten ersten neunzehnhundertfünfzig)
DA → MA: GebeAus("Sie sind am ersten ersten neunzehnhundertfünfzig geboren")
MA → A3: ConcatAusgabe(Sie_sind_am ersten, ersten, neunzehnhundertfünfzig, geboren)
A3 → MA: PlayPromptConcatComplete
MA → DA: AusgabeComplete
DA → MA: ErkenneSprache(Domäne=j/n-Frage)
MA → E6: StarteErkennung(Modus=Einzelwort, Lexikon=(ja, nein))

In diesem einfachen Beispiel weisen die Spracherkennungsmodule Ei die folgenden einfachen Spracherkennungscharakteristika auf:
Das Spracherkennungsmodul E1 ist als Einzelziffernerkenner ausgestaltet, E2 als Spracherkennungsmodul zur Erkennung kontinuierlicher Ziffern, also von Ziffernketten. Das Spracherkennungsmodul E3 ist als Spracherkennungsmodul zur Erkennung fließend gesprochener Sprache mit einem begrenzten Vokabular, dem Lexikon "Kernvokabular", ausgestaltet. Das Spracherkennungsmodul E4 ist als Schlüsselworterkenner mit dem Lexikon "Vertrieb und Kundenservice" ausgestaltet, das Spracherkennungsmodul E5 ist als ein Spracherkennungsmodul zur Erkennung von vorgegebenen Wortkombinationen, in diesem Spezialfall zur Erkennung von einer Datumsangabe ausgestaltet.

Die verwendeten Sprachausgabemodule Aj sind in diesem einfachen Beispiel als Modul zur Ausgabe vorgegebener, gespeicherter Sprachkonserven (A1), ein Modul zur Synthetisierung von Sprache aus beispielsweise Phonemen (A2) sowie ein Modul zur Ausgabe zusammengesetzter einzelner vorgegebener, gespeicherter Sprachkonserven (A3) ausgestaltet.

Wie aus diesem einfachen Beispiel ersichtlich wird, wird jeweils dem Mittel MA von den Spracherkennungsmodulen Ei die Ergebnisse der Spracherkennung bzw. von den Sprachausgabemodulen Aj das auszugebende Sprachsignal zugeführt.

Andererseits wird von dem Mittel MA den einzelnen Modulen Ei, Aj die jeweilige zur Erkennung benötigte Information zugeführt, beispielsweise auch das in das Sprachverarbeitungssystem eingesprochene Sprachsignal.

Eine weitere Weiterbildung des Sprachverarbeitungssystem und des Verfahrens zur Sprachverarbeitung ist darin zu sehen, daß das Sprachsignal auch von mehreren Spracherkennungsmodulen Ei oder Sprachausgabemodulen Aj gleichzeitig bearbeitet wird, und daß jeweils das bezüglich eines beliebigen Ähnlichkeitsmaßes beste Ergebnis verwendet wird oder auch nur ein Vergleichsergebnis zur Erhöhung der Erkennungssicherheit verwendet wird.

### Dialogablaufsteuerung

Mit der Dialogablaufsteuerung DA wird ein vorgebbarer Dialog mit dem Benutzer B des Sprachverarbeitungssystems je nach der Anwendungssituation durchgeführt, und abhängig von der jeweiligen Dialogssituation dem Mittel MA Steuerungsinformation, beispielsweise noch benötigte Information zugeführt. Weiterhin wird in dieser Weiterbildung beispielsweise das Ergebnis der Spracherkennungsmodule in dem Mittel zur Dialogablaufsteuerung ausgewertet, was beispielsweise auf die folgende Weise erfolgen kann:

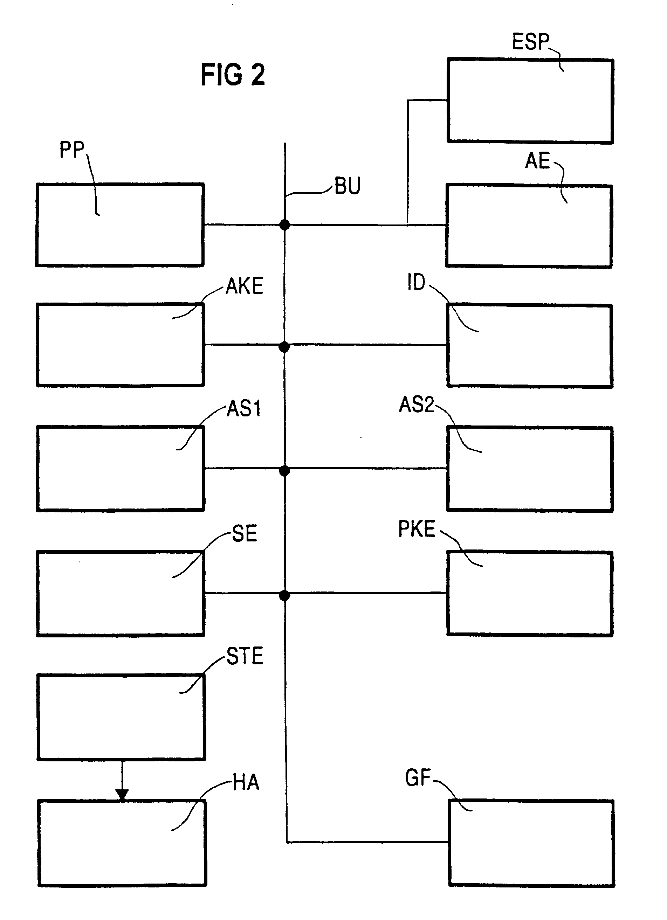

Die Dialogablaufsteuerung DA weist mindestens folgende Komponenten auf, die miteinander gekoppelt sind, beispielsweise über einen Bus BU (vgl. Figur 2):
- ein Eingabemittel EM,
- einen Eingabespeicher ESP,
- eine Aktionsermittlungseinheit AE,
- einen Parameterparser PP.

Die Arbeitsweise der einzelnen Komponenten der Dialogablaufsteuerung DA werden im Zusammenhang mit den Verfahren zur Ablaufsteuerung eines Dialogs mit dem Benutzer B im weiteren detalliert erläutert.

Die Aktionsermittlungseinheit AE dient zum einen zur Ermittlung von Aktionshinweisen und zum anderen zur Ermittlung mindestens einer vorgebbaren Aktion, auf die durch den Aktionshinweis hingewiesen wird. Die Aktion wird aus einer beliebigen Anzahl vorgebbarer Aktionen ermittelt. Verschiedene Verfahrensweisen zur Ermittlung der gesuchten Aktion, auf die durch den Aktionshinweis hingewiesen wird, sind dem Fachmann bekannt. Einige beispielhaft dargelegte Möglichkeiten zu deren Realisierung werden jedoch im Zusammenhang mit dem Verfahren detailliert erläutert.

Der Parameterparser PP dient zur Ermittlung von Aktionsparametern, die jeder Aktion jeweils eindeutig zugeordnet sind, aus der in dem Eingabespeicher ESP gespeicherten digitalen Aktionsinformation.

In Figur 2 ist die Dialogablaufsteuerung DA mit einigen Weiterbildungen der Dialogablaufsteuerung DA zur Aktionsermittlung dargestellt.

Eine in einer Ausgestaltung vorgesehene Informationsdatenbank ID enthält jeweils anwendungspezifisch gesuchte Information, die anhand der bestimmten Aktion und den anschließend für die Aktion ermittelten Aktionsparameter ermittelt wird.

Es ist in einer Weiterbildung eine Aktionsklärungseinheit AKE vorgesehen zur Ermittlung weiterer Aktionshinweise von dem Benutzer. Die Aktionsklärungseinheit AKE gewinnt vor allem in Anwendungsgebieten eine erhöhte Bedeutung, wenn es gilt, unter verschiedenen Aktionen die gesuchte Aktion zu ermitteln. Sind die Aktionshinweise, die von dem Benutzer B der Dialogablaufsteuerung DA übergeben werden, zur Bestimmung der Aktion nicht ausreichend, so wird die Aktionsklärungseinheit AKE zur Ermittlung weiterer Aktionshinweise von dem Benutzer B verwendet. Die Ausgestaltung der Aktionsklärungseinheit AKE wird im Zusammenhang mit dem Verfahren näher erläutert. Es ist jedoch nicht notwendig, daß die Aktionsklärungseinheit AKE genau eine Aktion ermittelt. Es ist ebenso vorgesehen, die Anzahl vorgegebener Aktionen in einer beliebigen Art zu reduzieren, um somit nur noch eine geringere Anzahl von Aktionen weiter zu verarbeiten.

In einer Weiterbildung ist eine Parameterklärungseinheit PKE vorgesehen zur Ermittlung weiterer Aktionsparameter von dem Benutzer B. Die Parameterklärungseinheit PKE wird verwendet, wenn für die mindestens eine ermittelte Aktion nicht alle Aktionsparameter, die den jeweiligen Aktionen zugeordnet sind, bestimmt werden können. Für diesen Fall ist es vorteilhaft, daß die Parameterkläruungseinheit PKE verwendet wird, um fehlende Aktionsparameter von dem Benutzer B zu ermitteln.

In einer Weiterbildung der Dialogablaufsteuerung DA ist es ferner vorteilhaft, einen ersten Aktionsspeicher AS1 und/oder einen zweiten Aktionsspeicher AS2 vorzusehen. In dem ersten Aktionsspeicher AS1 werden Aktionen und deren Aktionsparameter gespeichert, bei denen der mindestens eine Aktionshinweis vollständig mit mindestens einem Teil von Schlüsselbegriffen, deren Bedeutung im weiteren beschrieben wird, übereinstimmt. In dem zweiten Aktionsspeicher AS2 werden Aktionen und deren Aktionsparameter gespeichert, bei denen mindestens einer der Aktionshinweise mit mindestens einem Schlüsselbegriff übereinstimmt.

Ferner ist in einer Weiterbildung ein Mittel GF zur Generierung von Fragen (prompts) an den Benutzer B zur Ermittlung weiterer Aktionshinweise und/oder weiterer Aktionsparameter vorgesehen. Der Aufbau des Mittels GF zur Generierung von Fragen ist beispielsweise aus dem Dokument [3] bekannt.

Ferner ist es in einer Weiterbildung der Dialogablaufsteuerung DA vorgesehen, eine Steuerungseinheit STE zur Steuerung einer Hintergrundanwendung HA unter Verwendung der ermittelten Information zu verwenden. Der Aufbau der Steuerungseinheit STE ist völlig anwendungspezifisch und dient lediglich dazu, die ermittelte Aktion zur Steuerung der Hintergrundanwendung HA zu verwenden. Die unterschiedlichen Verwendungsmöglichkeiten und somit auch die unterschiedlichen Ausgestaltungen der Steuerungseinheit STE werden im weiteren detailliert beschrieben.

Ferner ist in einer Weiterbildung ein Schlüsselbegriffeditor SE vorgesehen, mit dem zum einen die im weiteren beschriebenen Schlüsselbegriffe und zum anderen neue Aktionen und/oder Aktionsparameter verändert, entfernt oder hinzugefügt werden können.

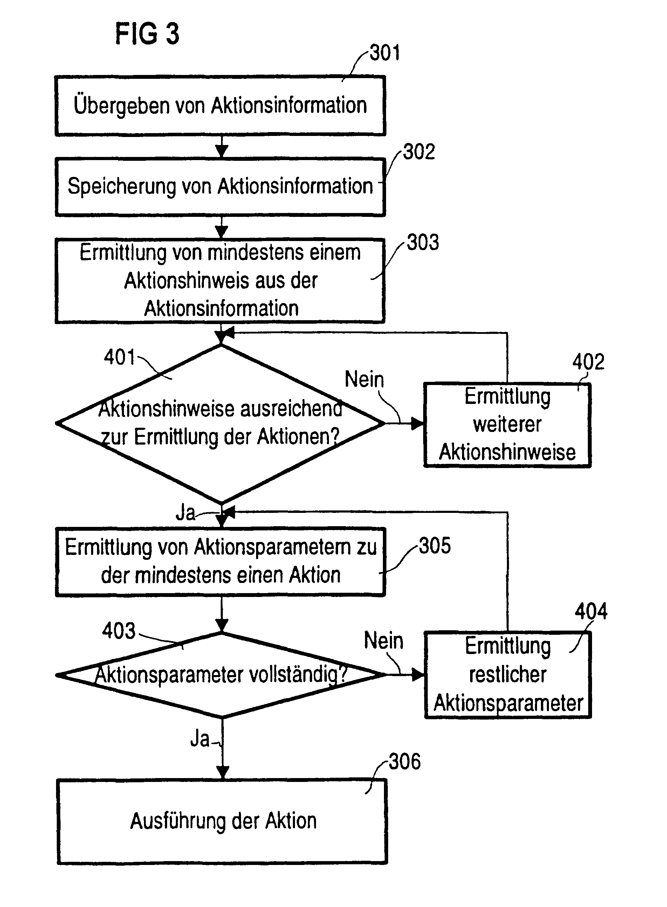

Die einzelnen Verfahrensschritte des Verfahrens sind in Figur 3 dargestellt.

In einem ersten Schritt 301 wird von dem Benutzer B der Dialogablaufsteuerung DA Aktionsinformation, die mindestens einen Aktionshinweis aufweist, übergeben. Das Verfahren muß nicht notwendigerweise mit der im vorigen beschriebenen Anwendung durchgeführt werden, es ist ebenso möglich, das Verfahren mit Hilfe eines Rechners durchzuführen.

Die Aktionsinformation wird von dem Benutzer B an die Dialogablaufsteuerung DA oder das Sprachverarbeitungssystem übergeben. Die Aktionsinformation wird digitalisiert und als digitalisierte Aktionsinformation gespeichert 302. Die digitale Aktionsinformation kann beispielsweise in einer Phonemdarstellung oder auch in Form eines üblichen Codes zur Darstellung von Schriftzeichen (beispielsweise ASCII-Code) gespeichert werden.

In einem weiteren Schritt 303 wird aus der gespeicherten Aktionsinformation unter Verwendung des Parameterparses PP, dessen Aufbau beispielsweise aus dem Dokument [4] bekannt ist, mindestens ein Aktionshinweises ermittelt.

Unter Verwendung des Aktionshinweises und der Aktionsermittlungseinheit AE wird mindestens eine Aktion bestimmt 304.

Die Bestimmung der mindestens einen Aktion kann auf unterschiedliche Weise erfolgen. Eine sehr einfach jedoch in keinster Weise ausschließlich verwendbare Methode liegt darin, jeder Aktion eine vorgebbare Anzahl von Schlüsselbegriffen, die jeweils die Aktion charakterisieren, zuzuordnen, und die aus der Aktionsinformation ermittelten Aktionshinweise, die durch den Parameterparser PP ermittelt werden, mit den Schlüsselbegriffen zu vergleichen. Der Vergleich kann durch einen direkten Wortvergleich oder auch durch einen beliebigen Mustervergleich, deren Algorithmen jedem Fachmann geläufig sind, erfolgen.

Ist die mindestens eine Aktion ermittelt worden 304, werden für alle Aktionen die Aktionsparameter, die den Aktionen eindeutig zugeordnet sind, aus der digitalen Aktionsinformations mittels des Parameterparser PP ermittelt 305. Anhand der ermittelten Aktion sowie der zugehörigen Aktionsparameter wird nun in einem letzten Schritt 306 die Aktion durchgeführt.

In einer Weiterbildung des Verfahrens wird Information zu der Aktion aus der Informationsdatenbank ID ermittelt und dem Benutzer B über die Ausgabeeinheit AUS dargestellt.

Reichen die in der digitalen Aktionsinformation enthaltenen Aktionshinweise nicht für die Ermittlung mindestens einer Aktion aus 401, so ist es in einer Weiterbildung vorgesehen, weitere Aktionshinweise beispielsweise durch einen Dialog mit dem Benutzer B zu ermitteln 402.

Dies geschieht z. B. unter Verwendung der Aktionsklärungseinheiten AKE, die vorzugsweise derart ausgestaltet ist, daß für die vorgegebenen Aktionen jeweils mindestens ein Ermittlungs-prompt eindeutig zugeordnet ist. Unter dem Ermittlungsprompt sind beispielsweise Fragen zu verstehen, die der jeweiligen Aktion zugeordnet und fest gespeichert sind. Diese Ermittlungsprompts werden dem Benutzer B bei unzureichender Information zur Ermittlung der Aktionen dargestellt. Der Benutzer B gibt auf diese Ermittlungsprompts, also die entsprechenden Fragen, Antworten, die dann wiederum verarbeitet werden, wodurch weitere Aktionshinweise ermittelt werden. Der Dialog wird solange durchgeführt und wiederholt, bis die ermittelten Aktionshinweise und weiteren Aktionshinweise ausreichend sind zur Identifikation der vorgebbaren Anzahl von Aktionen.

Ist die mindestens eine Aktion ermittelt, werden für jede Aktion die Aktionsparameter, die der jeweiligen Aktion zugeordnet sind, ermittelt 305.

Sind jedoch nicht alle benötigten Aktionsparameter vollständig aus der in dem Eingabespeicher ESP ermittelten digitalen Aktionsinformation bekannt bzw. ermittelt worden, was in einem zusätzlichen Verfahrensschritt 403 geprüft wird, werden die restlichen Aktionsparameter beispielsweise von der Parameterklärungseinheit PKE ermittelt 404.

Dies geschieht beispielsweise ebenfalls in einem Dialog mit dem Benutzer B. Für diesen Dialog können wiederum den einzelnen Parametern zugeordnete Prompts, im folgenden als Parameter-Prompts bezeichnet, verwendet werden, die bei notwendiger Ermittlung der entsprechenden Aktionsparameter an den Benutzer B ausgegeben werden und der Benutzer B antwortet auf die entsprechenden Fragen.

Sowohl die Ermittlung weiterer Aktionshinweise 402 als auch die Ermittlung der restlichen Aktionsparameter 404 kann jedoch auch auf andere Weise erfolgen.

Beispielsweise ist es nicht unbedingt notwendig, fest vorgegebene Ermittlungs-Prompts oder Parameter-Prompts den einzelnen Aktionen bzw. Parametern zuzuordnen, wodurch zum einen zwar die Einfachheit in der Durchführung des Verfahrens und in der Anpassung der jeweiligen Anwendung und die Erweiterbarkeit der Aktionen und Parameter erheblich vereinfacht wird, jedoch immer nur fest vorgegebene Fragen an den Benutzer B gestellt werden.

Es ist in einer Weiterbildung des Verfahrens und der Dialogablaufsteuerung DA vorgesehen, das Mittel GF zur Generierung von Fragen an den Benutzer B zu verwenden. Eine Möglichkeit zur Realisierung des Mittels GF ist beispielsweise in dem Dokument [3] beschrieben.

In einer Weiterbildung des Verfahrens ist vorgesehen, zur Ermittlung der Aktion in der Aktionsermittlungseinheit AE folgende Schritte durchzuführen. In der Aktionsermittlungseinheit AE wird für jede Aktion der Vergleich der Schlüsselbegriffe mit den Aktionshinweisen durchgeführt.

Es wird eine erste Menge von Aktionen ermittelt, bei denen alle Aktionshinweise mit mindestens einem Teil der Schlüsselbegriffe übereinstimmen. Anschaulich beschrieben bedeutet diese Vorgehensweise, daß die Schnittmenge aller Aktionen, auf die durch die Aktionshinweise hingewiesen wurde, ermittelt wird. Die erste Menge von Aktionen wird beispielsweise in dem ersten Aktionsspeicher AS1 gespeichert.

Ferner wird eine zweite Menge von Aktionen gebildet, bei denen mindestens ein Teil der Aktionshinweise mit den Schlüsselbegriffen übereinstimmt. Diese Vorgehensweise bedeutet anschaulich eine Bildung der Vereinigungsmenge aller Aktionen, auf die hingewiesen wurde. Die zweite Menge von Aktionen wird beispielsweise in dem zweiten Aktionsspeicher AS2 gespeichert.

Enthält die erste Menge genau ein Element, so ist die zu ermittelnde Aktion eindeutig identifiziert. Für diesen Fall ist kein weiterer Klärungsdialog notwendig. Enthält die erste Menge jedoch mehr Elemente als die Anzahl von zu ermittelnden Aktionen, so ist die Aktion durch die initiale Benutzereingabe nicht genau genug beschrieben. In diesem Fall ist es vorteilhaft, den im vorigen beschriebenen Klärungsdialog durchzuführen.

Ist die erste Menge eine leere Menge, so enthält die initiale Benutzeräußerung Hinweise auf disjunkte Aktionen. In diesem Fall wird vorteilhafterweise der Klärungsdialog durch die in der zweiten Menge enthaltenen Aktionen gesteuert.

Sind sowohl die erste Menge als auch die zweite Menge leere Mengen, so wird beispielsweise ein Klärungsdialog zur Unterscheidung aller in der Anwendung bekannten Aktionen durchgeführt.

Somit dienen die erste Menge und die zweite Menge in dieser Weiterbildung als Grundlage für den Dialog mit dem Benutzer B zur Ermittlung der mindestens einen Aktion.

Die ermittelte Aktion kann in einer Weiterbildung des Verfahrens vorteilhaft zur Steuerung mindestens einer Hintergrundanwendung HA eingesetzt werden.

Unter der Hintergrundanwendung HA sind unterschiedlichste Einsatzmöglichkeiten des Verfahrens und der Dialogablaufsteuerung DA zu verstehen, die im weiteren erläutert werden.

Das Verfahren sowie die Dialogablaufsteuerung DA können beispielsweise in folgenden Gebieten vorteilhaft eingesetzt werden:
- in einem Telefondienst,
- in einem Telekauf-System und/oder Tele-Banking-System,
- in einem sog. Voice Mail Handling System,
- zur Steuerung einer beliebigen Maschine, beispielsweise einer Werkzeugmaschine oder eines Roboters,
- zur Steuerung eines Rechners,
- in einem Messaging-System einer Nebenstellenanlage eines Telekommunikationssystems.

Ferner ist es in einer Weiterbildung des Verfahrens vorteilhaft, daß die Auswertung der digitalen Aktionsinformation, die in dem Eingabespeicher ESP gespeichert wird, von dem Parameterparsel PP in bezüglich der Eingabe der Aktionsinformation in umgekehrter Reihenfolge ermittelt werden.

Dies bedeutet, daß die Auswertung der Aktionsinformation am Schluß der Aktionsinformation begonnen wird und bis zum Anfang der Aktionsinformation weitergeführt wird. Durch diese Vorgehensweise wird eine Korrektur der Aktionsinformation durch den Benutzer B in einem Satz möglich, was im folgenden noch detalliert erläutert wird.

Zum einfacheren Verständnis der Dialogablaufsteuerung DA wird im folgenden ein sehr einfaches Beispiel aus der Touristikbranche dargestellt. Beispielsweise können in diesem Anwendungsgebiet folgende Aktionen definiert sein:
- Auskunft über Bahnverbindungen;
- Auskunft über Flugverbindungen;
- Auskunft über Schiffsverbindungen;
- Auskunft über Hotelzimmer;
- Restaurantinformation.

Die einzelnen Aktionen können beispielsweise durch folgende Parameter gekennzeichnet sein;
- Bahnauskunft: <Abfahrtsort>, <Ankunftsort>, <Datum>, <Uhrzeit>
- Flugauskunft: <Abfahrtsort>, <Ankunftsort>, <Datum>, <Uhrzeit>
- Schiffsauskunft: <Abfahrtsort>, <Ankunftsort>, <Datum>, <Uhrzeit>
- Hotelauskunft: <Ort>, <Zimmer>, <Art>, <Anzahl der Personen>, <Check in Datum>, <Check out Datum>
- Restaurantinformation: <Ort>, <Stil>, <Kategorie>.

In Form eines Pseudocodes werden im folgenden die einzelnen Aktionen spezifiziert. Hierbei wird jeweils unter dem Punkt 2.1 der Aktion eindeutig eine Nummer zugewiesen, unter dem Punkt 2.2 der jeweilige Ermittlungs-Prompt und unter der Nummer 2.3 die einzelnen Parameterspezifikationen, die sich, jeweils abhängig von der definierten Grammatik in diesem Fall für vorgegebene Parameter-Prompts in einer Weise darstellen, daß jeweils unter dem Punkt 3.1 und dem Punkt 3.3 die jeweilige Grammatik des jeweiligen Aktionsparameters gegeben ist und unter dem Punkt 3.2 der jeweilige Parameter-Prompt dargestellt ist.

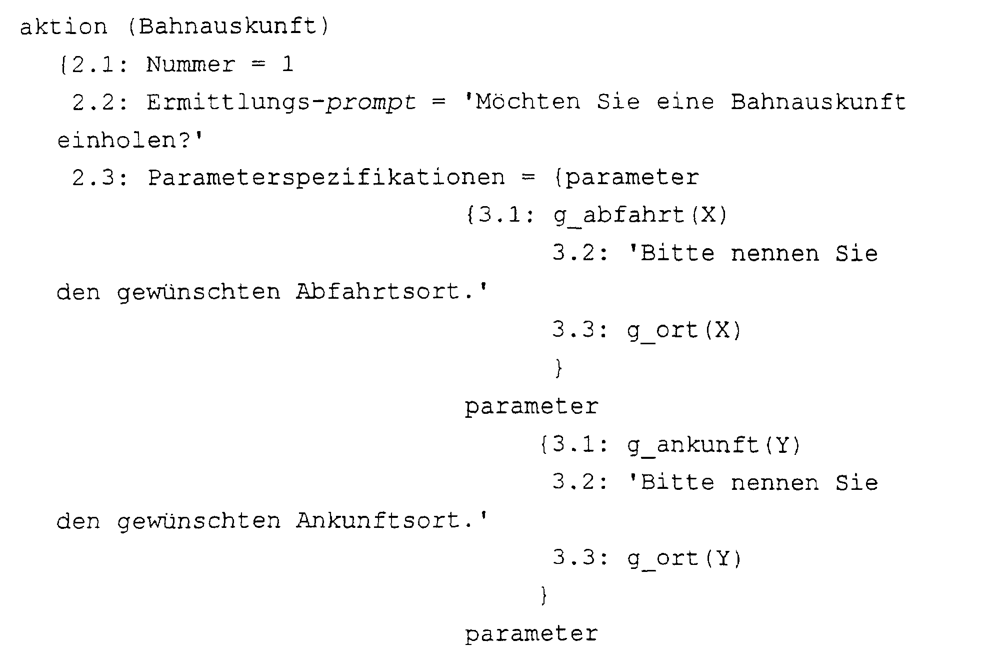

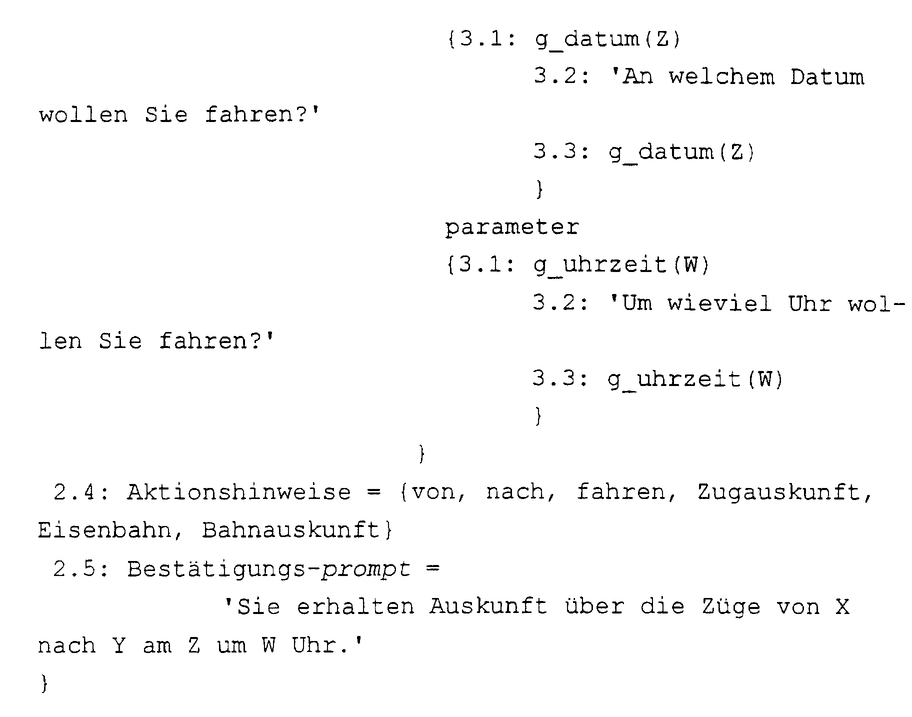

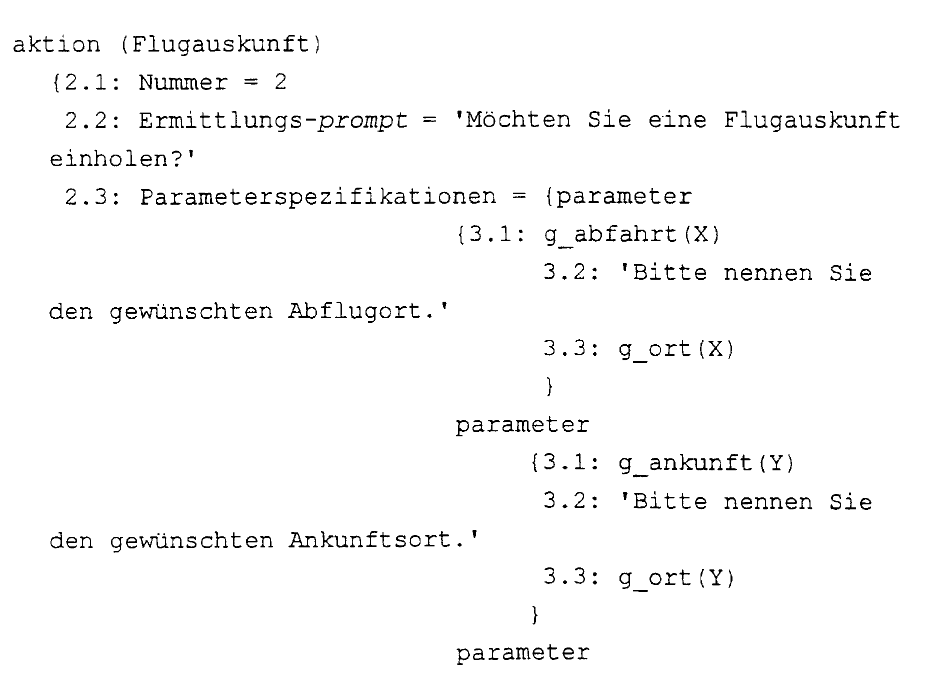

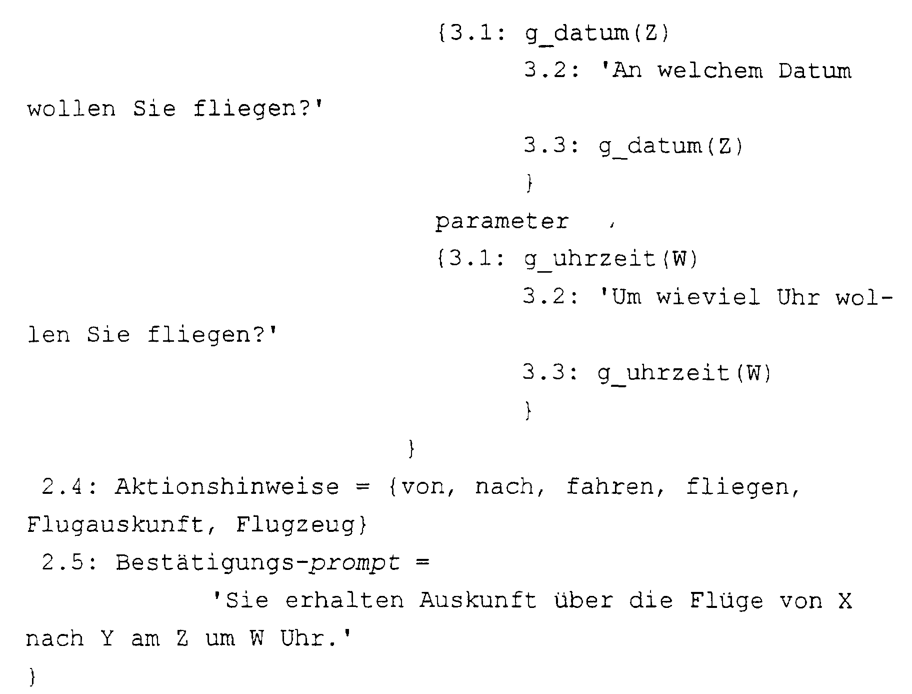

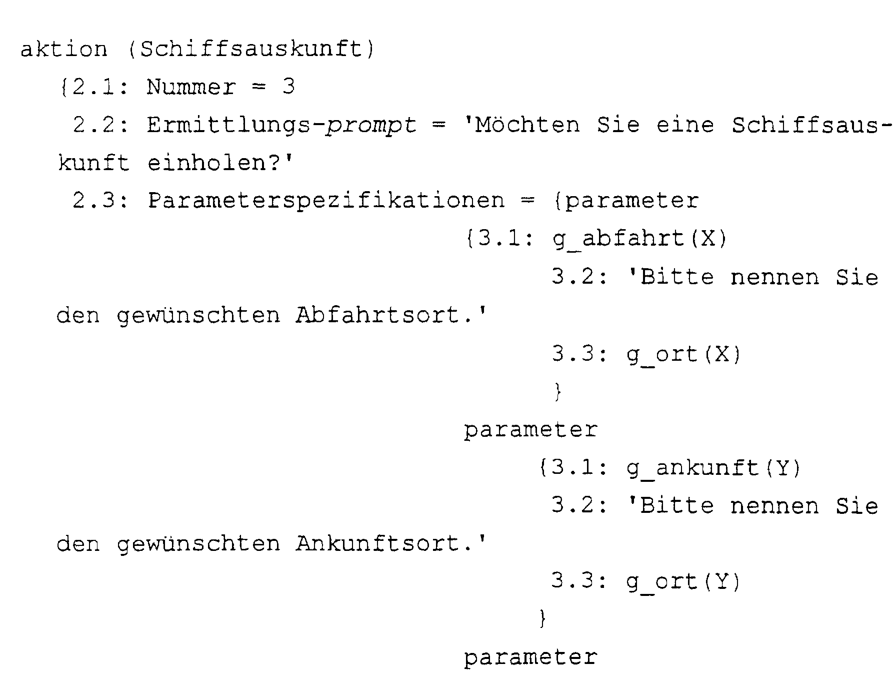

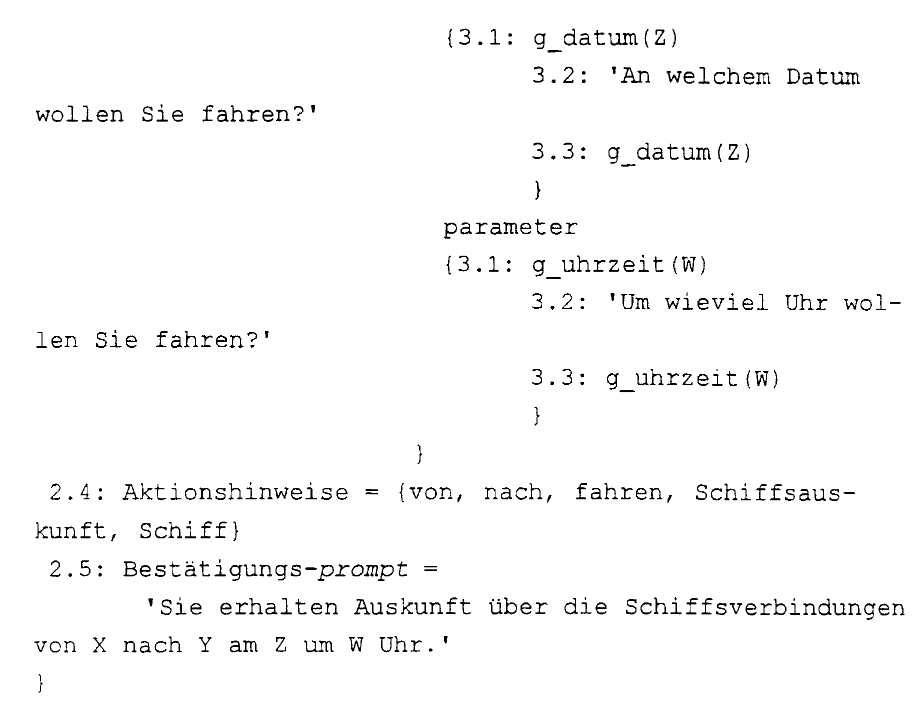

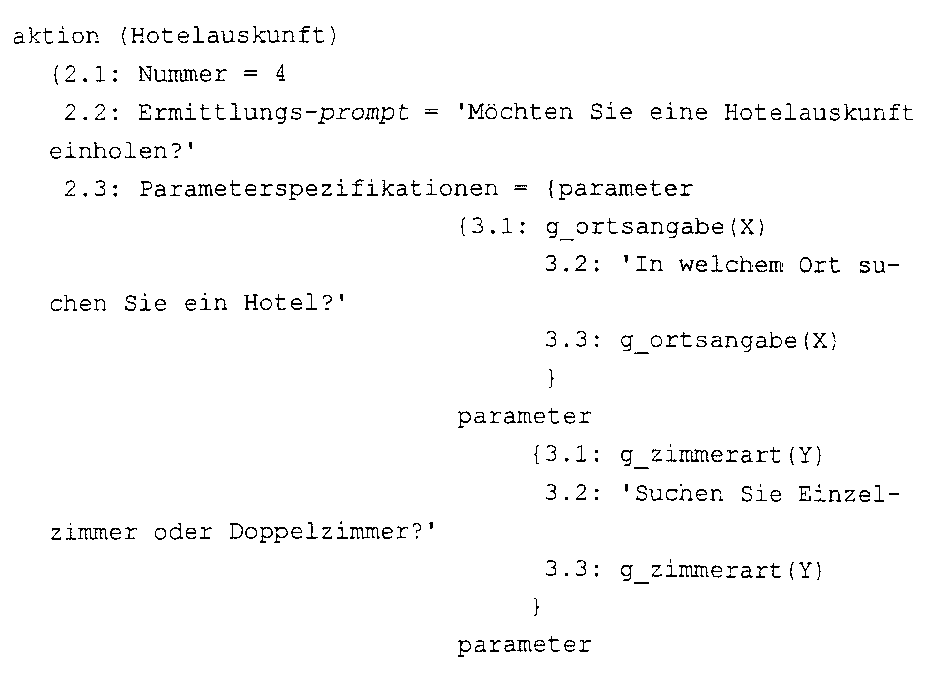

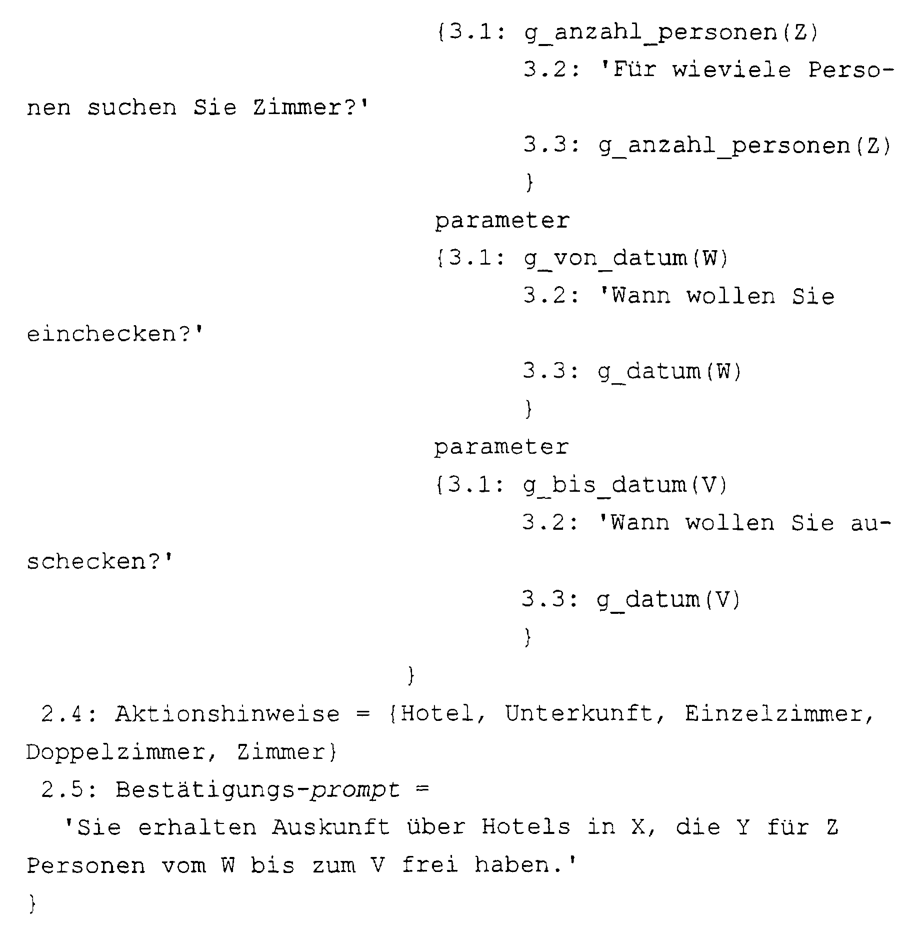

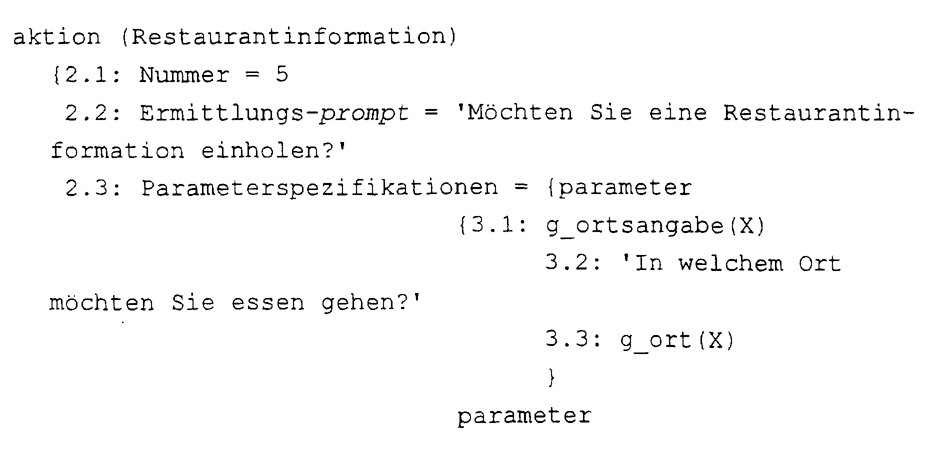

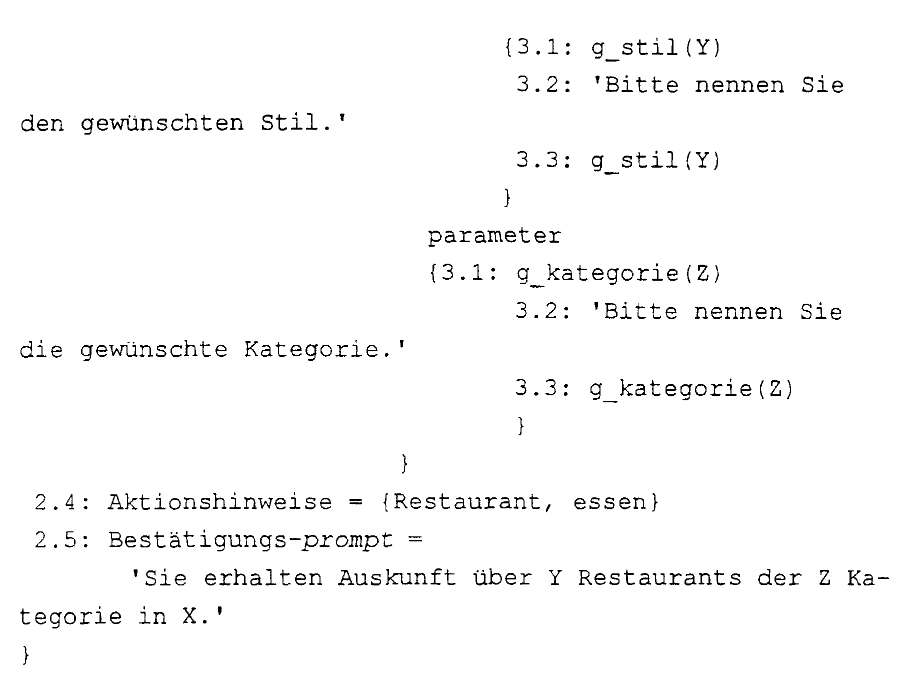

In der folgenden Tabelle sind Schlüsselbegriffe für die einzelnen Aktionen, die durch die entsprechende Nummer in den geschweiften Klammern eindeutig identifiziert sind, beispielhaft aufgeführt.
- von: {1, 2, 3}
- nach: {1, 2, 3}
- fahren: {1, 2, 3}
- Zugauskunft: {1}
- Eisenbahn: {1}
- fliegen: {2}
- Flugauskunft: {2}
- Flugzeug: {2}
- Schiffsauskunft: {3}
- Schiff: {3}
- Hotel: {4}
- Unterkunft: {5}
- Einzelzimmer: {4}
- Doppelzimmer: {4}
- Restaurant: {5}
- Essen: {5}

Ein Beispiel für einen Dialog des Benutzers B mit der Dialogablaufsteuerung DA wird im folgenden dargestellt.

Der Benutzer B äußert seinen Wunsch präzise und vollständig.

Der Benutzer B gibt folgende Informationen ein:
"Ich möchte am 1. Januar 1996 um 5.oo Uhr mit dem Zug von München nach Hamburg fahren."

Der erste Aktionsspeicher AS1 enthält unter Verwendung der oben beschriebenen Schlüsselbegriffe und Grammatiken die erste Menge von Aktionen {1}. Der zweite Aktionsspeicher AS2 enthält die zweite Menge von Aktionen {1, 2, 3}.

Da der erste Aktionsspeicher AS1 genau ein Element aufweist, wird direkt von der Dialogablaufsteuerung DA aus der Informationsdatenbank ID die gesuchte Information ermittelt und beispielsweise dem Benutzer B durch folgende Antwort dargestellt:
"Sie erhalten Auskunft über die Flüge von München nach Hamburg am 1. Januar 1996 um fünf Uhr: "1. Flug, 2. Flug, 3. Flug usw..".

Bei einem weiteren Beispiel nennt der Benutzer B weder Uhrzeit noch Verkehrsmittel:

Die Aktionsinformation ist beispielsweise folgende:
"Ich möchte am 1. Januar 1996 von München nach Hamburg."

Der erste Aktionsspeicher AS1 enthält in diesem Fall die erste Menge von Aktionen {1,2,3}. Der zweite Aktionsspeicher AS2 enthält die zweite Menge von Aktionen {1,2,3}. In der Dialogablaufsteuerung DA wird ein Klärungsdialog initiiert, um zwischen den Aktionen {1,2,3} zu unterscheiden.

Hierzu wird beispielsweise der oben beschriebene Ermittlungs-Prompt:
"Möchten Sie eine Bahnauskunft?"
dem Benutzer B ausgegeben.

Der Benutzer B antwortet beispielsweise mit "Nein".

In diesem Fall wird von der Dialogablaufsteuerung DA beispielsweise folgender Ermittlungsprompt ausgegeben:
"Möchten Sie eine Flugauskunft?"

Beantwortet der Benutzer B diese Frage mit "Ja", so wird ein weiterer Klärungsdialog zur Ermittlung der restlichen, noch fehlenden Aktionsparameter für die Flugauskunft durchgeführt. Hierbei wird beispielsweise zur Ermittlung des Aktionsparameters Uhrzeit der Parameter-Prompt:
"Um wieviel Uhr möchten Sie fliegen?"
dem Benutzer B ausgegeben.

Der Benutzer B antwortet beispielsweise:
"Um fünf Uhr."

Nun hat die Dialogablaufsteuerung DA ausreichend Information, um die gesuchte Aktion zu ermitteln. Das Ergebnis wird dem Benutzer B beispielsweise in folgender Weise dargestellt:
"Sie erhalten Auskunft über die Flüge von München nach Hamburg am 1. Januar 1996 um fünf Uhr".

Weitere Details über eine mögliche Ausgestaltung der Dialogablaufsteuerung DA sind in der Deutschen Patentanmeldung mit dem amtlichen Aktenzeichen 19615693.9 beschrieben.

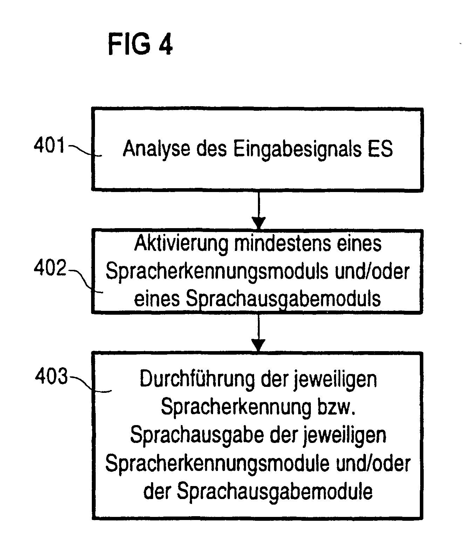

In Fig. 4 ist in einem Ablaufdiagramm das Verfahren in seinen Verfahrensschritten dargestellt. Das Eingabesignal ES wird analysiert, wobei mit dem Eingabesignal ES beschrieben wird, welche Art von Spracherkennung und/oder welche Art von Sprachausgabe im weiteren Verfahren benötigt wird 401.

Ferner wird abhängig von dem Eingabesignal ES mindestens ein Spracherkennungsmodul Ei und/oder ein Sprachausgabemodul Aj aktiviert 402.

In einem letzten Schritt 403 wird in mindestens einen der Spracherkennungsmodule und/oder der Sprachausgabemodule die jeweilige Spracherkennung bzw. Sprachausgabe durchgeführt.

Ferner ist es in einer Weiterbildung vorgesehen, gemeinsame Vorverarbeitungsschritte oder auch gemeinsame Teile von Algorithmen, die gemeinsam in verschiedenen Verfahren zur Spracherkennung gleichzeitig verwendet werden, in einem separaten Vorverarbeitungsmodul VV durchzuführen.

In der gemeinsamen Vorverarbeitung z. B. in mindestens einem Vorverarbeitungsmodul VV können beispielsweise eine akustische Vorverarbeitung oder eine sog. Abstandsberechnung der untersuchten Teile des Sprachsignals realisiert werden.

Ferner ist es in einer Weiterbildung vorteilhaft, Ressourcen gemeinsam zu nutzen, beispielsweise in einer Weise, daß ein Lexikon von mehreren Spracherkennungsmodulen Ei gemeinsam verwendet wird. Dies ist beispielsweise möglich, indem ein Lexikon zur Erkennung fließend gesprochener Sprache u. a. die Worte "Ja" und "Nein" enthält, wodurch es möglich ist, daß auch ein Schlüsselwort-Erkenner (Keyword-Spotter) auf die Begriffe "Ja" und "Nein" zur Durchführung der Spracherkennung in diesem Fall auf dasselbe Lexikon zugreifen kann.

Auch eine gemeinsame Nutzung von Ressoucen bei der Nachbearbeitung sind sowohl bei dem Verfahren als auch mit einem Nachbearbeitungsmodul bei dem Sprachverarbeitungssystem als eine Ausgestaltung vorgesehen.

Sowohl das Sprachverarbeitungssystem als auch das Verfahren zur Sprachverarbeitung kann sehr vorteilhaft sowohl in der Spracherkennung und in der Sprachausgabe sowie in der Durchführung eines Dialogs mit einem Benutzer B als auch zur Erstellung von Sprachdialogsystemen verwendet werden, da eine sehr einfache Zusammenstellung der anwendungsspezifischen Kombinationen von Spracherkennungsmodulen und/oder Sprachausgabemodulen möglich ist.

In diesem Dokument wurden folgende Veröffentlichungen zitiert:
[1] G. Ruske, Automatische Spracherkennung, Oldenbourg-Verlag, 1. Auflage, ISBN 3-486-20877-2, München, S. 106 - 171, 1988
[2] A. Zell, Simulation neuronaler Netze, Edison Wesley, 1. Auflage, ISBN 3-89319-554-8, S. 137 - 143, 1994
[3] Caspari, R., 1993, Bottom Up Generation from Flat Semantic Structures, Proc. Deklarative und prozedurale Aspekte der Sprachverarbeitung, Deutsche Gesellschaft für Sprachverarbeitung, Sektion Computerlinguistik, 4. Fachtagung, S. 1 - 6
[4] Naumann, Sven und Hagen Langer, 1994: Parsing, Stuttgart, Teubner, 1. Auflage, ISBN 3-519-02139-0, S. 155 - 166
[5] DE 44 12 309 A1
[6] GB 2 119 208 A

## Patentansprüche

1. Sprachverarbeitungssystem,
- mit mehreren Spracherkennungsmodulen (Ei, i=1..n), welche jeweils eine Spracherkennung unter Verwendung eines dem jeweiligen Spracherkennungsmodul zugeführten Sprachsignals durchführen, wobei ein dem zugeführten Sprachsignal zugrundeliegender gesprochenen Zant erkannt wird, wobei die von dem jeweiligen Spracherkennungsmodul durchgeführte Spracherkennung bezüglich einer zeitlichen Abfolge oder Bedeutung des gesprochenen Zantes charakterisiert ist, und/oder
- mit mehreren Sprachausgabemodulen (Aj, j = 1..m), welche jeweils eine Sprachausgabe unter Verwendung von dem jeweiligen Sprachausgabemodul zugeführten Sprachparameters durchführten, wobei ein gesprochenen Zant ausgegeben wird, wobei die von dem jeweiligen Sprachausgabemodul durchgeführte Sprachausgabe bezüglich eines Prinzips einer Synthese des auszugebenden Zantes charakterisiert ist, und
- mit einem Mittel (MA) zur Auswahl mindestens eines Spracherkennungsmoduls (Ei) und/oder Sprachausgabemoduls (Aj) für eine im weiteren durchzuführende Spracherkennung und/oder Sprachausgabe, abhängig von einem Eingabesignal (ES), mit dem beschrieben wird, welche Art von Spracherkennung und/oder Sprachausgabe im weiteren benötigt wird
- mit einer mit dem Mittel zur Auswahl verbundenen Dialogablaufsteuerung, mit welcher ein vorgegebenen Dialog mit einem Benutzer durchgeführt wird, woebi von der Dialogablaufsteuerung abhängig von der jeweiligen Dialogsituation das Eingabesignal erzeugt und dem Mittel zu Auswahl zugeführt wird.

2. Sprachverarbeitungssystem nach Anspruch 1,
bei dem das Mittel (MA) zur Auswahl des Spracherkennungsmoduls (Ei) und/oder des Sprachausgabemoduls (Aj) derart ausgestaltet ist, daß das Spracherkennungsmodul (Ei) und/oder das Sprachausgabemodul (Aj) von dem Mittel (MA) gesteuert wird.

3. Sprachverarbeitungssystem nach Anspruch 1 oder 2,
bei dem Teile von dem Spracherkennungsmodul (Ei) und/oder dem Sprachausgabemodul (Aj), die gemeinsam verwendet werden, in mindestens einem Vorverarbeitungsmodul (VV) und/oder in mindestens einem Nachbearbeitungsmodul realisiert sind.

4. Sprachverarbeitungssystem nach Anspruch 3,
bei dem mehrere Spracherkennungsmodule (Ei) und/oder Sprachausgabemodule (Aj) gemeinsame Ressourcen verwenden.

5. Sprachverarbeitungssystem nach einem der Ansprüche 1 bis 4,
- bei dem das Spracherkennungsmodul (Ei) mindestens zur Durchführung einer der folgenden Arten der Spracherkennung ausgebildet ist:
-- Einzelziffererkennung,
-- Erkennung von Ziffernketten,
-- Erkennung von Wörtern aus einem begrenzten Vokabular,
-- Erkennung eines Einzelwortes mit einem unbegrenzten Vokabular,
-- Erkennung fließend gesprochener Sprache mit einem unbegrenzten Vokabular,
-- Erkennung von vorgegebenen Wortkombinationen,
-- Schlüsselwort-Erkennung,
-- Alphabeterkennung,
-- Lautfolgenerkennung,
-- Sprechererkennung,
-- DTMF-Erkennung,
und/oder
- bei dem das Sprachausgabemodul (Aj) mindestens zur Durchführung einer der folgenden Arten der Sprachausgabe ausgebildet ist:
-- Ausgabe vorgegebener, gespeicherter Sprachkonserven,
-- Ausgabe zusammengesetzter einzelner vorgegebener, gespeicherter Sprachkonserven,
-- Ausgabe von aus gespeicherten Phonemen synthetisierten Worten,
-- Ausgabe von DTMF-Tönen.

6. Verfahren zur Sprachverarbeitung,
- bei dem ein vorgegebenen Dialog mit einem Benutzer durchgeführt wird, wobei abhängig von der jeweiligen Dialogsituation eine Dialogablaufsteuerung ein Eingabesignal erzeugt,
- bei dem das Eingabesignal (ES) analysiert wird (401), mit dem beschrieben wird, welche Art von Spracherkennung und/oder Sprachausgabe im weiteren benötigt wird,
- bei dem abhängig von dem Eingabesignal (ES) aus einer Menge mehrerer Spracherkennungmodule (Ei, i = 1..n), welche jeweils eine Spracherkennung unter Verwendung eines dem jeweiligen Spracherkennungsmodul zugeführten Sprachsignals durchführen, wobei ein dem zugeführten Sprachsignal zugrundeliegender gesprochenen Zant erkannt wird, wobei die von dem jeweiligen Spracherkennungsmodul durchgeführte Spracherkennung bezüglich einer zeitlichen Abfolge oder Bedeutung des gesprochenen Zantes charakterisiert ist, und/oder aus einer Menge mehrerer Sprachausgabemodule (Aj, j = 1..m), welche jeweils eine Sprachausgabe unter Verwendung von dem jeweiligen Sprachausgabemodul zugeführten Sprachparameters durchführten, wobei ein gesprochenen Zant ausgegeben wird, wobei die von dem jeweiligen Sprachausgabemodul durchgeführte Sprachausgabe bezüglich eines Prinzips einer Synthese des auszugebenden Zantes charakterisiert ist, mindestens ein Spracherkennungsmodul (Ei) und/oder mindestens ein Sprachausgabemodul (Aj), aktiviert wird (402), und
- bei dem mit dem ausgewählten Spracherkennungsmodul und/oder dem Sprachausgabemodul die jeweilige Art der Spracherkennung und/oder der Sprachausgabe durchgeführt wird (403).

7. Verfahren nach Anspruch 6,
bei dem vor der Spracherkennung eine Vorverarbeitung (VV) des zu erkennenden Sprachsignals erfolgt.

8. Verfahren nach Anspruch 6 oder 7,
bei dem nach der Spracherkennung eine Nachbearbeitung des erkannten Sprachsignals erfolgt.

## Claims

1. Speech processing system,
- having a plurality of speech recognition modules (Ei, i=1..n), each of which carries out speech recognition by using a speech signal supplied to the respective speech recognition module, a spoken sound on which the supplied speech signal is based being recognized, the speech recognition carried out by the respective speech recognition module being characterized with respect to a time sequence or significance of the spoken sound, and/or
- having a plurality of speech output modules (Aj, j=1..m), each of which makes a speech output by using speech parameters supplied by the respective speech output module, a spoken sound being output, the speech output made by the respective speech output module being characterized with respect to a principle of a synthesis of the sound to be output, and
- having a means (MA) for selecting at least one speech recognition module (Ei) and/or speech output module (Aj) for a speech recognition and/or speech output yet to be carried out, depending on an input signal (ES), which describes the type of speech recognition and/or speech output which will continue to be needed,
- having a dialogue sequence/controller which is connected to the selection means and with which a predefined dialogue is carried out with a user, the input signal being generated by the dialogue sequence/controller on the basis of the respective dialogue situation and supplied to the selection means.

2. Speech processing system according to Claim 1, in which the means (MA) for selecting the speech recognition module (Ei) and/or the speech output module (Aj) are configured in such a way that the speech recognition module (Ei) and/or the speech output module (Aj) are controlled by the means (MA).

3. Speech processing system according to Claim 1 or 2, in which parts of the speech recognition module (Ei) and/or the speech output module (Aj) which are used jointly are implemented in at least one pre-processing module (VV) and/or in at least one post-processing module.

4. Speech processing system according to Claim 3 in which a plurality of speech recognition modules (Ei) and/or speech output modules (Aj) use common resources.

5. Speech processing system according to one of Claims 1 to 4,
- in which the speech recognition module (Ei) is designed at least to carry out one of the following types of speech recognition:
-- individual digit recognition,
-- recognition of chains of digits,
-- recognition of words from a limited vocabulary,
-- recognition of an individual word with an unlimited vocabulary,
-- recognition of fluently spoken speech with an unlimited vocabulary,
-- recognition of predefined word combinations,
-- keyword recognition,
-- alphabet recognition,
-- sound sequence recognition,
-- speaker recognition,
-- DTMF recognition,
and/or
- in which the speech output module (Aj) is designed at least to carry out one of the following types of speech output:
-- output of predefined, stored speech recordings,
-- output of assembled individual predefined stored speech recordings,
-- output of words synthesized from stored phonemes,
-- output of DTMF tones.

6. Method of speech processing,
- in which a predefined dialogue is carried out with a user, a dialogue sequence controller generating an input signal on the basis of the respective dialogue situation,
- in which the input signal (ES) is analysed (401), which describes the type of speech recognition and/or speech output which will continue to be needed,
- in which, on the basis of the input signal (ES), from a set of a plurality of speech recognition modules (Ei, i=1..n), each of which carries out speech recognition by using a speech signal supplied to the respective speech recognition module, a spoken sound on which the supplied speech signal is based being recognized, the speech recognition carried out by the respective speech recognition module being characterized with respect to a time sequence or significance of the spoken sound, and/or from a set of a plurality of speech output modules (Aj, j=1..m), each of which makes a speech output by using speech parameters supplied by the respective speech output module, a spoken sound being output, the speech output made by the respective speech output module being characterized with respect to a principle of a synthesis of the sound to be output, at least one speech recognition module (Ei) and/or at least one speech output module (Aj) is activated (402), and
- in which the respective type of speech recognition and/or the speech output is carried out (403) with the selected speech recognition module and/or the speech output module.

7. Method according to Claim 6, in which, before the speech recognition, pre-processing (VV) of the speech signal to be recognized is carried out.

8. Method according to Claim 6 or 7, in which, after the speech recognition, post-processing of the recognized speech signal is carried out.

## Revendications

1. Système de traitement de la parole
- avec plusieurs modules de reconnaissance de la parole (Ei, i = 1..n) qui à l'aide d'un signal vocal envoyé au module respectif de reconnaissance de la parole, opèrent chacun une reconnaissance de la parole consistant à reconnaître un son énoncé qui est à la base du signal vocal envoyé, la reconnaissance de la parole opérée par le module respectif de reconnaissance de la parole étant **caractérisée par** rapport à une suite chronologique ou signification du son énoncé, et/ou
- avec plusieurs modules de sortie de parole (Aj, j=1..m) qui à l'aide du paramètre vocal envoyé au module respectif de sortie de parole, opèrent chacun une sortie de parole consistant à sortir un son énoncé, la sortie de parole opérée par le module respectif de sortie de parole étant **caractérisée par** rapport à un principe d'une synthèse du son à sortir, et
- avec un moyen (MA) de sélection d'au moins un module de reconnaissance de la parole (Ei) et/ou un module de sortie de parole (Aj) pour une reconnaissance de la parole et/ou une sortie de parole en fonction d'un signal d'entrée (ES) utilisé pour décrire quel mode de reconnaissance de la parole et/ou de sortie de parole est requis par la suite,
- avec une commande de gestion de dialogue associée au moyen de sélection et utilisée pour réaliser un dialogue imposé avec un utilisateur, le signal d'entrée étant généré par ladite commande de gestion de dialogue en fonction de la situation de dialogue respective et envoyé au moyen de sélection.

2. Système de traitement de la parole selon la revendication 1,
dans lequel le moyen (MA) de sélection du module de reconnaissance de la parole (Ei) et/ou du module de sortie de parole (Aj) est réalisé de telle sorte que le module de reconnaissance de la parole (Ei) et/ou le module de sortie de parole (Aj) est commandé par le moyen (MA).

3. Système de traitement de la parole selon la revendication 1 ou 2,
dans lequel les parties du module de reconnaissance de la parole (Ei) et/ou du module de sortie de parole (Aj), qui sont utilisées conjointement, sont réalisées dans au moins un module de prétraitement (VV) et/ou dans au moins un module de posttraitement.

4. Système de traitement de la parole selon la revendication 3,
dans lequel plusieurs modules de reconnaissance de la parole (Ei) et/ou modules de sortie de parole (Aj) utilisent des ressources communes.

5. Système de traitement de la parole selon l'une des revendications 1 à 4,
- dans lequel le module de reconnaissance de la parole (Ei) est conçu au moins pour la mise en oeuvre d'un des modes suivants de reconnaissance de la parole :
-- reconnaissance de chiffres isolés,
-- reconnaissance de chaînes de chiffres,
-- reconnaissance de mots parmi un vocabulaire limité
-- reconnaissance d'un mot isolé avec un vocabulaire illimité
-- reconnaissance de la parole continue avec un vocabulaire illimité
-- reconnaissance de combinaisons de mots imposées
-- reconnaissance de mots-clés
-- reconnaissance de l'alphabet
-- reconnaissance de suites de sons
-- reconnaissance vocale
-- reconnaissance DTMF
et/ou
- dans lequel le module de sortie de parole (Aj) est conçu au moins pour la mise en oeuvre d'un des modes suivants de sortie de parole :
-- sortie de réserves de parole imposées et mémorisées
-- sortie de différentes réserves de parole assemblées, imposées et mémorisées,
-- sortie de mots synthétisés à partir de phonèmes mémorisés
-- sortie de sons DTMF.

6. Procédé de traitement de la parole,
- dans lequel un dialogue imposé est réalisé avec un utilisateur et un signal d'entrée est généré par une commande de gestion de dialogue en fonction de la situation de dialogue respective,
- dans lequel le signal d'entrée (ES) utilisé pour décrire quel mode de reconnaissance de la parole et/ou de sortie de parole est requis par la suite, est analysé (401),
- dans lequel en fonction dudit signal d'entrée (ES), parmi une quantité de plusieurs modules de reconnaissance de la parole (Ei, i = 1..n) qui à l'aide d'un signal vocal envoyé au module respectif de reconnaissance de la parole, opèrent chacun une reconnaissance de la parole consistant à reconnaître un son énoncé qui est à la base du signal vocal envoyé, la reconnaissance de la parole opérée par le module respectif de reconnaissance de la parole étant **caractérisée par** rapport à une suite chronologique ou signification du son énoncé, et/ou parmi une quantité de plusieurs modules de sortie de parole (Aj, j + 1..m) qui à l'aide du paramètre vocal envoyé au module respectif de sortie de parole, opèrent chacun une sortie de parole consistant à sortir un son énoncé, la sortie de parole opérée par le module respectif de sortie de parole étant **caractérisée par** rapport à un principe d'une synthèse du son à sortir, au moins un module de reconnaissance de la parole (Ei) et/ou au moins un module de sortie de parole (Aj) est activé (402), et
- dans lequel le module de reconnaissance de la parole et/ou le module de sortie de parole sélectionné est utilisé pour mettre en oeuvre le mode respectif de reconnaissance de la parole et/ou de sortie de parole (403).

7. Procédé selon la revendication 6,
dans lequel la reconnaissance de la parole est précédée d'un prétraitement (VV) du signal vocal à reconnaître.

8. Procédé selon la revendication 6 ou 7,
dans lequel la reconnaissance de la parole est suivie d'un posttraitement du signal vocal reconnu.
